# EUROPÄISCHE PATENTSCHRIFT

(11) **EP 2 529 160 B1**
(45) Veröffentlichungstag und Bekanntmachung des Hinweises auf die Patenterteilung: **28.01.2015**
(21) Anmeldenummer: 10800695.8
(22) Anmeldetag: 09.12.2010
(51) Int. Cl.: F24D 3/14, F16L 3/13

(54) **HALTESCHIENE ZUR AUFNAHME EINES HEIZUNGSROHRES**
RETAINING RAIL FOR ACCOMMODATING A HEATING PIPE
RAIL DE RETENUE POUR LE LOGEMENT D'UN TUYAU DE CHAUFFAGE

(30) Priorität: 25.01.2010 DE 102010005779
(43) Veröffentlichungstag der Anmeldung: 05.12.2012
(73) Patentinhaber: Winkler Technik GmbH, 88662 Überlingen (DE)
(72) Erfinder: WINKLER, Wolfram, 88662 Überlingen (DE)
(74) Vertreter: Weiss, Peter
(86) Internationale Anmeldenummer: PCT/EP2010/007476
(87) Internationale Veröffentlichungsnummer: WO 2011/088870

(56) Entgegenhaltungen:
- DE-A1- 2 522 018
- DE-A1- 4 335 670
- DE-A1-102005 011 226
- FR-A1- 2 489 443
- FR-A1- 2 700 349
- NL-C2- 1 012 540
- US-A1- 2005 108 976

## Beschreibung

### TECHNISCHES GEBIET

Die vorliegende Erfindung betrifft eine Halteschiene zur Aufnahme eines Heizungsrohres einer Fußbodenheizung mit zumindest einer Seitenwand, wobei in der Seitenwand eine Aufnahme zur Aufnahme des Heizungsrohrs vorgesehen ist, wobei der Aufnahme zumindest ein Niederhaltemechanismus zum Festlegen des Heizungsrohrs zugeordnet ist,

### STAND DER TECHNIK

Beim Verlegen einer Fussbodenheizung müssen vor dem Einbringen des Estrichs die Heizungsrohre entsprechend einem Verlegemuster fixiert werden. Dazu sind unterschiedliche Vorrichtungen, wie Halteschienen, Halteclips od.dgl. bekannt.

In diesem Zusammenhang wird auf die DE 25 22 018 A1 hingewiesen, welche einen Abstandshalter für Armierungselemente im Betonbau oder in Betonfertigteilen offenbart, wie sie nach dem Stand der Technik üblich sind.

Ferner zeigt bspw. die DE 43 35 670 A1 eine für Heizungsrohre einer Fussbodenheizung bestimmte Halteschiene mit einer im wesentlichen rechteckig ausgeformten Öffnungen, die zur Aufnahme des Heizungsrohres dient. Um das Heizungsrohr in der Aufnahme zu halten, ist seitlich eine Haltenase angeordnet, die die Öffnung verjüngen soll. Ein sicheres Festlegen des Heizungsrohres ist mit einer solchen Vorrichtung, wenn Kräfte oder Spannungen vor allem beim Verlegen auf das Heizungsrohr wirken, bspw. weil es um eine Kurve geführt wird, nicht möglich.

Das Dokument DE 4 335 670 A1 offenbart den Oberbegriff des Anspruchs 1.

### AUFGABE

Aufgabe der vorliegenden Erfindung ist es, eine Halteschiene zu schaffen, mittels der ein Heizungsrohr, insbesondere für Fussbodenheizungen, zuverlässig schon während dem Verlegen fixiert werden kann.

### LÖSUNG DER AUFGABE

Zur Lösung der Aufgabe führt, dass der Niederhaltemechanismus zumindest einen, bevorzugt zwei Finger umfasst, der/die sich beim Einsetzen des Heizungsrohres in die Aufnahme bewegt/en.

Bevorzugt verläuft ein Finger etwa parallel zu einem Rand oder einer Randkante der Seitenwand. In einem bevorzugten Ausführungsbeispiel weicht der Finger leicht von der Waagrechten ab, sodass eine Einführschräge ausgebildet wird. Das bringt den Vorteil mit, dass das Heizungsrohr leichter in die Aufnahme einführbar ist.

Zweckmässigerweise wird der Finger dadurch gebildet, dass er von einer Aussparung untergriffen wird. Diese Aussparung erstreckt sich in der Seitenwand unterhalb des Fingers und weist bevorzugt eine grössere Länge als Höhe auf. Dadurch erhält der Finger seine Form. Vorteil ist, dass die Aufnahme in einem Arbeitsschritt mit der Aussparung, die den Finger ausbildet, und mit einem einfachen Werkzeug aus der Halteschienen herausgestanzt werden kann.

In einem weiteren Ausführungsbeispiel kann der Finger aber auch separat ausgebildet sein und mit der Seitenwand verbunden werden. Dazu ist der Finger vorzugsweise als Feder, dünnes Plättchen od. dgl. ausgebildet.

Besonders bevorzugt ist der Finger aber einstückig aus der Seitenwand herausgeformt und elastisch ausgebildet. D. h., er ist in einem gewissen Bereich elastisch verformbar und vor allem rückstellbar, sodass er beim Einbringen des Heizungsrohres mit dem Heizungsrohr seitlich nach unten weggedrückt werden kann. Dadurch wird der Niederhaltemechanismus deaktiviert und die Aufnahme bzw. eine Einsetzöffnung soweit geöffnet, dass sie das Rohr aufnehmen kann. Wenn sich das Rohr in der Aufnahme befindet und der Finger nicht mehr mit Druckkraft beaufschlagt wird, verformt sich der Finger wieder elastische zurück in seine im wesentlichen parallel zu dem horizontalen Rand befindliche Ausgangsposition. Dann ragt der Finger über das Heizungsrohr und hält dieses nieder.

Zweckmässigerweise umfasst die Aufnahme eine Auflagefläche. Besonders bevorzugt ist diese Auflagefläche ähnlich der Oberfläche eines Heizungsrohres gekrümmt. Das hat den Vorteil, dass das Heizungsrohr nicht beschädigt oder geknickt wird. Vorzugsweise erstreckt sich die Krümmung der Auflagefläche auf einen Winkel von 90°.

Bei bestimmungsgemäßer Montage der Halteschiene ist die Seitenwand im wesentlichen vertikal ausgerichtet. Bevorzugt umfasst die Halteschiene allerdings zwei Seitenwände, die zweckmässigerweise durch einen Bodenstreifen verbunden sind. Dabei kann der Bodenstreifen auch durch Aussparungen, die der Gewichtseinsparung bzw der Aufnahme von Befestigungselementen dienen sollen, unterbrochen sein.

In einem besonders bevorzugten Ausführungsbeispiel ist die Halteschiene als U-Profil ausgebildet. Bei bestimmungsgemässer Montage weist der Bodenstreifen nach unten. Zweckmässigerweise dient der Bodenstreifen zur Befestigung an einem Boden. Der Bodenstreifen kann auch nur auf dem Boden aufgelegt sein oder schwimmend auf dem Boden gelagert sein.

Besonders bevorzugt weist jeder der beiden Seitenwände zumindest eine Aufnahme auf, wobei die gegenüberliegenden Aufnahmen in ihrer Form und Ausgestaltung identisch sind. Das hat den Vorteil, dass das Heizungsrohr an zwei Punkten, die relativ nahe beieinander liegen, festlegbar ist.

Zweckmässigerweise sind in den Seitenwänden jeweils mehrere Aufnahmen vorgesehen. Vorzugsweise sind diese Aufnahmen in einem Abstand, der dem Verlegemuster der Fussbodenheizung entspricht, angeordnet.

### FIGURENBESCHREIBUNG

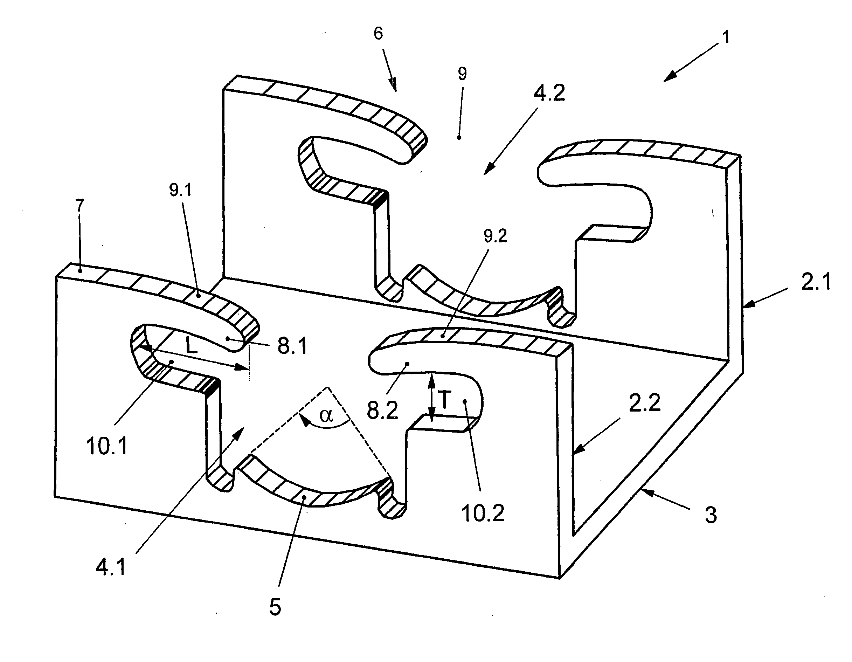

Weitere Vorteile, Einzelheiten und Merkmale der Erfindung ergeben sich aus der nachfolgenden Beschreibung bevorzugter Ausführungsbeispiele sowie anhand der Zeichnung; diese zeigt in ihrer einzigen Figur eine perspektivische Darstellung eines Ausschnitts aus einer erfindungsgemässen Halteschiene.

### AUSFÜHRUNGSBEISPIEL

Die Figur zeigt eine Halteschiene 1 zur Aufnahme eines nicht dargestellten Heizungsrohres einer Fussbodenheizung. Die Halteschiene 1 ist in Längsrichtung als U-Profil ausgebildet und weist zwei Seitenwände 2.1 und 2.2 auf, die über einen Bodenstreifen 3 verbunden sind.

In einer korrekten Montageposition weisen die beiden Seitenwände 2.1. und 2.2 etwa vertikale nach oben. Der Bodenstreifen 3 dient zur Befestigung an einem Untergrund bzw. kann auf diesem auch nur aufgelegt oder schwimmend gelagert werden.

In jedem der Seitenwände 2.1 und 2.2 ist jeweils eine Aufnahme 4.1 und 4.2 vorgesehen. Die sich gegenüberliegenden Aufnahmen 4.1 und 4.2 stimmen in ihrer Form überein, d.h., sie sind identisch ausgeführt, was aber nicht sein muss. Deshalb wird im Folgenden nur die Aufnahme 4.1 detailliert beschrieben. Im übrigen sind tatsächlich in einer Seitenwand 2.1 bzw. 2.2 mehrere Aufnahmen in Längsrichtung der Halteschiene 1 vorgesehen. Diesen sind dann in der jeweils gegenüberliegenden Seitenwand ebenfalls entsprechende Aufnahmen zugeordnet.

Die Aufnahme 4.1 weist eine Auflagefläche 5 und einen Niederhaltemechanismus 6 auf. Die Auflagefläche 5 ist gekrümmt ausgebildet. Dabei erstrecken sich die Auflageflächen 5 über einen Winkel α. Im vorliegenden Ausführungsbeispiel weist der Winkel α ca. 90° auf. In weiteren Ausführungsbeispielen kann sich der Winkel aber auch Bogenwinkelbereiche erstrecken.

Der Niederhaltemechanismus 6 umfasst zumindest einen, im vorliegenden Ausführungsbeispiel zwei im wesentlichen parallel zu einem Rand 7 der Seitenwand 2.2 angeordnete Finger 8.1 und 8.2 mit nach unten weisenden Einlaufschrägen 9.1 und 9.2, die zwischen sich eine Einsetzöffnung 9 ausbilden. Die Finger 8.1 und 8.2 sind federartig bzw. elastisch ausgebildet, d.h., sie können in einem bestimmten Bereich elastisch verformt werden, stellen sich aber auch wieder zurück.

Vorzugsweise werden die Finger 8.1 und 8.2 dadurch gebildet, dass ca. parallel zu dem Rand 7 Aussparungen 10.1 und 10.2 in den Seitenwand 2.1 eingebracht sind. Dabei sind diese Aussparungen 10.1 und 10.2 so ausgebildet, dass ihre Länge L grösser als ihre Tiefe T ist. Auch hier sind aber andere Formen denkbar. Die Aussparungen 10.1 und 10.2 schliessen an die Aufnahme 4.1 an. Bevorzugt wird die Aufnahme 4.1 mit den beiden Aussparungen 10.1 und 10.2 in einem Arbeitsschritt, evtl. auch mit einem Werkzeug, aus der Seitenwand 2.1 herausgestanzt.

Die Funktionsweise der vorliegenden Erfindung ist folgende:
In Abständen werden die Halteschienen auf einem Boden aufgebracht, auf dem auch die Fussbodenheizung verlegt werden soll. Zur Fixierung eines Heizungsrohres wird dieses in die Aufnahmen 4.1 und 4.2 der Halteschiene 1 eingebracht. Dazu wird das Heizungsrohr zuerst an den Einlaufschrägen 9.1 und 9.2 der Finger 8.1 und 8.2 angelegt. Dann wird das Heizungsrohr nach unten gedrückt. Dabei bewegen sich auch die elastischen Finger 8.1 und 8.2 seitlich nach unten und geben so die Aufnahme 4.1 frei und vergrössern die Einsetzöffnung 9 bzw. deaktivieren den Niederhaltemechanismus 6. So kann das Heizungsrohr in die Aufnahme 4.1 bis auf die Auflagefläche 5 gleiten.

Wenn das Heizungsrohr mit seiner breitesten Durchmesserstelle zwischen den beiden Fingern 9.1 und 9.2 hindurch geglitten ist, schnappen die beiden Finger 9.1 und 9.2 wieder elastisch in ihre Ausgangspositionen, wie in der Figur gezeigt, zurück. Dabei liegen sie wieder relativ parallel zum Rand 7 über der Aufnahme 4.1 und verengen die Einsetzöffnung 9 so, dass das Heizungsrohr nicht unbeabsichtigt aus der Aufnahme 4.1 rutschen kann.

Um das Heizungsrohr in die Aufnahme 4.2 einzubringen wird analog evtl. auch gleichzeitig verfahren.

Im Rahmen der Erfindung liegt auch, dass nur ein einziger Finger vorgesehen ist, der die Aufnahme 4.1 beziehungsweise 4.2 zumindest teilweise übergreift. In diesem Fall ist der Finger selbstverständlich verlängert ausgebildet, sodass die Einsetzöffnung in ihrer lichten Weite etwa gleich bleibt, jedoch nach links oder rechts versetzt ist.

### Bezugszeichenliste

| | | | | | |
|---|---|---|---|---|---|
| 1 | Halteschiene | 34 | | 67 | |
| 2 | Seitenwand | 35 | | 68 | |
| 3 | Bodenstreifen | 36 | | 69 | |
| 4 | Aufnahme | 37 | | 70 | |
| 5 | Auflagefläche | 38 | | 71 | |
| 6 | Niederhaltemechanismus | 39 | | 72 | |
| 7 | Rand | 40 | | 73 | |
| 8 | Finger | 41 | | 74 | |
| 9 | Einsetzöffnung/Einlauf -schräge | 42 | | 75 | |
| 10 | Aussparung | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | T | Tiefe |
| 19 | | 52 | | L | Länge |
| 20 | | 53 | | α. | Winkel |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Halteschiene zur Aufnahme eines Heizungsrohres einer Fußbodenheizung mit zumindest einer Seitenwand (2.1, 2.2), wobei in der zumindest einen Seitenwand (2.1, 2.2) eine Aufnahme (4.1, 4.2) zur Aufnahme des Heizungsrohrs vorgesehen ist und der Aufnahme (4.1, 4.2) zumindest ein Niederhaltemechanismus (6) zum Festlegen des Heizungsrohrs zugeordnet ist,
**dadurch gekennzeichnet,**
**dass** der zumindest eine Niederhaltemechanismus (6) zumindest einen, bevorzugt zwei Finger (8.1, 8.2) umfasst, der/die sich beim Einsetzen des Heizungsrohres in die Aufnahme (4.1, 4.2) bewegt/bewegen.

2. Halteschiene nach Anspruch 1, **dadurch gekennzeichnet, dass** der/die Finger (8.1, 8.2) mit einer Einlaufschräge (9.1, 9.2) versehen ist/sind.

3. Halteschiene nach Anspruch 1 oder 2, **dadurch gekennzeichnet, dass** der/ die Finger (8.1, 8.2) im wesentlichen parallel zu einem horizontalen Rand (7) der zumindest einen Seitenwand (2.1, 2.2) angeordneten ist/sind.

4. Halteschiene nach wenigstens einem der Ansprüche 1 bis 3, **dadurch gekennzeichnet, dass** der/die Finger (8.1, 8.2) von zumindest einer in der zumindest einen Seitenwand (2.1, 2.2) angeordnete Aussparung (10.1, 10.2) untergriffen sind.

5. Halteschiene nach einem der vorhergehenden Ansprüche, **dadurch gekennzeichnet, dass** der/die Finger (8.1, 8.2) elastisch und insbesondere rückstellfähig ausgebildet ist/sind.

6. Halteschiene nach wenigstens einem der Ansprüche 1 bis 5, **dadurch gekennzeichnet, dass** die Finger (8.1, 8.2) zwischen sich einen Einsetzöffnung (9) ausbilden.

7. Halteschiene nach einem der vorhergehenden Ansprüche, **dadurch gekennzeichnet, dass** die Aufnahme (4.1, 4.2) eine bevorzugt gekrümmte Auflagefläche (5) aufweist.

8. Halteschiene nach Anspruch 7, **dadurch gekennzeichnet, dass** sich eine Krümmung der Auflagefläche (5) über einen Winkel von 90° erstreckt.

9. Halteschiene nach einem der vorhergehenden Ansprüche 1 bis 9, **dadurch gekennzeichnet, dass** die Seitenwand (2.1, 2.2) im wesentlichen vertikal ausgerichtet ist.

10. Halteschiene nach einem der vorhergehenden Ansprüche, **dadurch gekennzeichnet, dass** die Halteschiene (1) zwei Seitenwände (2.1, 2.2) aufweist, die über einen Bodenstreifen (3) miteinander verbunden sind und jede der beiden Seitenwände (2.1, 2.2) zumindest eine Aufnahme (4.1, 4.2) aufweist, die bevorzugt bezogen auf Form und Ausgestaltung übereinstimmen.

## Claims

1. A holding rail for receiving a heating pipe of a floor heating system, having at least one lateral wall (2.1, 2.2), wherein a receiver (4.1, 4.2) for receiving the heating pipe is provided in the at least one lateral wall (2.1, 2.2) and at least one hold-down mechanism (6) is associated with the receiver (4.1, 4.2) in order to secure the heating pipe, **characterized in that** the at least one hold-down mechanism (6) comprises at least one , preferably two, fingers (8.1, 8.2) which moves/move upon insertion of the heating pipe into the receiver (4.1, 4.2).

2. A holding rail according to claim 1, **characterized in that** the finger(s) (8.1, 8.2) is/are provided with a feed slope (9.1, 9.2).

3. A holding rail according to claim 1 or 2, **characterized in that** the finger(s) (8.1, 8.2) is/are arranged substantially parallel to a horizontal edge (7) of the at least one lateral wall (2.1, 2.2).

4. A holding rail according to at least one of claims 1 to 3, **characterized in that** at least one cut-out (10.1, 10.2) arranged in the at least one lateral wall (2.1, 2.2) reaches under the finger(s) (8.1, 8.2).

5. A holding rail according to any one of the preceding claims, **characterized in that** the finger(s) (8.1, 8.2) is/are elastic and in particular resilient.

6. A holding rail according to at least one of claims 1 to 5, **characterized in that** the fingers (8.1, 8.2) form an insertion opening (9) therebetween.

7. A holding rail according to any one of the preceding claims, **characterized in that** the receiver (4.1, 4.2) has a preferably curved support surface (5).

8. A holding rail according to claim 7, **characterized in that** a curvature of the support surface (5) extends over an angle of 90°.

9. A holding rail according to any one of the preceding claims 1 to 9, **characterized in that** the lateral wall (2.1, 2.2) is directed substantially vertically.

10. A holding rail according to any one of the preceding claims, **characterized in that** the holding rail (1) has two lateral walls (2.1, 2.2), connected to one another via a bottom strip (3), and each of the two lateral walls (2.1, 2.2) has at least one receiver (4.1, 4.2) which preferably match with regard to form and configuration.

## Revendications

1. Rail de retenue pour le logement d'un tuyau d'un chauffage par le sol avec au moins une paroi latérale (2.1, 2.2), dans l'au moins une paroi latérale (2.1, 2.2) étant prévu un dispositif de réception (4.2 4.1) destiné à recevoir le tuyau de chauffage et au dispositif de réception (4.1, 4.2) étant associé au moins un mécanisme de retenue en position abaissée (6) pour la fixation du tuyau de chauffage,
**caractérisé par le fait que**
l'au moins un mécanisme de retenue en position abaissée (6) comporte au moins un, de préférence deux doigts (8.1, 8.2) qui, lors de l'introduction du tuyau de chauffage, se déplace/déplacent vers le dispositif de réception (4.1, 4.2).

2. Rail de retenue selon la revendication 1, **caractérisé par le fait que** le ou les doigts (8.1, 8.2) est/sont pourvu d'une face d'entrée oblique (9.1, 9.2).

3. Rail de retenue selon la revendication 1 ou 2, **caractérisé par le fait que** le ou les doigts (8.1, 8.2) est/sont disposé(s) sensiblement parallèle(s) à un bord horizontal (7) de l'au moins une paroi latérale (2.1, 2.2).

4. Rail de retenue selon au moins l'une des revendications 1 à 3, **caractérisé par le fait qu'**avec le ou les doigts (8.1, 8.2) vient en prise par le bas au moins un l'évidement (10.1, 10.2) disposé dans l'au moins une paroi latérale (2.1, 2.2).

5. Rail de retenue selon l'une des revendications précédentes, **caractérisé par le fait que** le ou les doigts (8.1, 8.2) est/sont réalisés élastique(s) et en particulier à même d'être rappelé(s) en position.

6. Rail de retenue selon au moins l'une des revendications 1 à 5, **caractérisé par le fait que** les doigts (8.1, 8.2) forment entre eux une ouverture d'introduction (9).

7. Rail de retenue selon l'une quelconque des revendications précédentes, **caractérisé par le fait que** le dispositif de réception (4.1, 4.2) présente une surface d'appui de préférence courbe (5).

8. Rail de retenue selon la revendication 7, **caractérisé par le fait qu'**une courbure de la surface d'appui (5) s'étend sur un angle de 90°.

9. Rail de retenue selon l'une des revendications précédentes 1 à 9, **caractérisé par le fait que** la paroi latérale (2.1, 2.2) est orientée sensiblement verticalement.

10. Rail de retenue selon l'une des revendications précédentes, **caractérisé par le fait que** le rail de retenue (1) présente deux parois latérales (2.1, 2.2) qui sont reliées entre elles par l'intermédiaire d'une bande de fond (3) et chacune des deux parois latérales (2.1, 2.2) présente au moins un dispositif de réception (4.1, 4.2) qui coïncident de préférence en ce qui concerne la forme.
